# Europäisches Patentamt

# European Patent Office

# Office européen des brevets

(19)

(11) Veröffentlichungsnummer: **0 144 933**
**B1**

(12) **EUROPÄISCHE PATENTSCHRIFT**

(45) Veröffentlichungstag der Patentschrift: **16.01.91**

(51) Int. Cl.⁵: **G 03 B 17/14,** G 02 B 7/02

(21) Anmeldenummer: **84114564.2**

(22) Anmeldetag: **30.11.84**

(54) Objektiv-Fassung.

(30) Priorität: **02.12.83 DE 8334641 u**

(43) Veröffentlichungstag der Anmeldung:
**19.06.85 Patentblatt 85/25**

(45) Bekanntmachung des Hinweises auf die
Patenterteilung:
**16.01.91 Patentblatt 91/03**

(84) Benannte Vertragsstaaten:
**DE FR GB**

(56) Entgegenhaltungen:
**DE-B-1 246 388**
**DE-U-7 714 186**
**GB-A- 854 072**
**GB-A-2 086 600**
**US-A-3 819 254**
**US-A-4 013 352**
**US-A-4 174 157**

(73) Patentinhaber: **Firma Carl Zeiss**
**D-7920 Heidenheim (Brenz) (DE)**

(72) Erfinder: **Grosser, Siegfried**
**Iglauerstrasse 44**
**D-7920 Heidenheim (DE)**
Erfinder: **Ludwig, Christian**
**Dreissentalstrasse 54**
**D-7082 Oberkochen (DE)**
Erfinder: **Wallner, Kurt**
**Rosengasse 9**
**D-8057 Eching/Dietersheim (DE)**
Erfinder: **Herzog, Karl**
**Schlesierstrasse 3**
**D-8028 Taufkirchen (DE)**
Erfinder: **Bayerl, Eugen**
**Richard-Strauss-Strasse 4**
**D-8011 Kirchheim (DE)**

Courier Press, Leamington Spa, England.

EP 0 144 933 B1

## Beschreibung

Die vorliegende Erfindung bezieht sich auf eine Objektiv-Fassung zum Anschluß an eine Kamera mit einem ersten, an die Kamera anschließbaren Fassungsteil und einem im ersten gelagerten zweiten Fassungsteil. Solche Fassungen werden vorzugsweise für photographische Objektive verwendet, wobei der zweite Fassungsteil zur Halterung optischer Glieder dient und zur Fokussierung oder auch zur Brennweitenverstellung axial verschoben wird.

Bei Filmaufnahmekameras ist es oft wünschenswert das Bild und den zugehörigen Ton synchron aufzunehmen, wobei das Mikrophon vor dem Kameragehäuse angeordnet und mit diesem mechanisch und elektrisch verbunden ist.

Eine solche Zuordnung von Kamera und Mikrophon bedingt eine optimale Dämpfung aller im Kameragehäuse entstehenden Geräusche, vor allem der Laufgeräusche um eine Störung der Tonaufnahme zu vermeiden.

Man hat inzwischen die Geräuschdämpfung im Kamerabau sehr weit getrieben. Trotzdem ein seitlich vom Kameragehäuse angeordnetes Mikrophon keine Störgeräusche mehr aufnimmt, hat sich gezeigt, daß solche Störgeräusche bei Anordnung des Mikrophons vor dem Kameragehäuse nach wie vor auftreten.

Untersuchungen haben ergeben, daß dafür Geräusche verantwortlich sind, die aus dem Kameragehäuse durch das Kameraobjektiv nach vorne austreten. Der kleine Spalt, der bei Kameraobjektiven zwischen dem kamerafesten Fassungsteil und dem in diesem axial verschiebbaren Fassungsteil besteht, leitet Störgeräusche aus dem Kameragehäuse nach außen und zwar direkt in Richtung des Mikrophons.

Aus der GB—A—854 072 ist ein Objektiv bekannt, das in einem gasdichten Gehäuse angeordnet ist, wobei O-Ringe zur Abdichtung dienen. Die Verstellung des Objektivs und/oder der Blende ist umständlich, da das Gehäuse relativ zum Objektiv gedreht werden muß.

Aus der US—A—3 819 254 ist ein Objektiv bekannt, das zwei, axial gegeneinander verschiebbare Fassungsteile aufweist. In ein Fassungsteil sind zwei ringförmige Nuten eingearbeitet, in die jeweils eine gewellte Feder eingelegt ist. Die Federn liegen an der zylindrischen Fläche des anderen Fassungsteils an und bewirken eine Zentrierung dieses Fassungsteils. Da die Federn gewellt sind, bleibt der Schlitz zwischen den beiden Fassungsteilen über radial verteilte Bereiche offen.

Es ist nun die Aufgabe der vorliegenden Erfindung eine Objektiv-Fassung nach dem Oberbegriff des Anspruchs 1 so auszubilden, daß Geräusche die im Inneren einer mit der Objektiv-Fassung verbundenen Kamera entstehen nicht durch das Objektiv nach außen dringen können.

Die Lösung dieser Aufgabe erfolgt durch eine Ausbildung der Objektiv-Fassung nach den kennzeichnenden Merkmalen des Anspruchs 1.

Bei dieser Konstruktion nach der Erfindung wird durch die über seinen gesamten Umfang radial federnd an der Zylinderfläche eines Fassungsteils anliegende Anordnung der Spalt zwischen den beiden Fassungsteilen geschlossen, wobei durch die Wahl eines Materials mit guten Trocken-Gleiteigenschalten für dieses Element dafür gesorgt ist, daß das beispielsweise zum Fokussieren des Objektivs am Fokussier-Ring der Fassung aufzubringende Drehmoment gegenüber einem nicht abgedichteten Objektiv nicht meßbar erhöht ist.

Das bei der Objektivfassung nach der Erfindung vorgesehene radial federnde Element kann gemäß den Ansprüchen 2 oder 3 ausgebildet sein, wobei insbesondere die Wahl eines Silikonschlauches als federndes Element einen einfachen Aufbau gewährleistet.

Die Konstruktion nach der Erfindung ist so einfach daß auch schon vorhandene Photoobjektive ohne große Kosten nachträglich damit ausgerüstet werden können.

Bei besonders hohen Anforderungen an die Geräuschdämpfunq kann es sich als vorteilhaft erweisen an mehreren Stellen einer Objektiv-Fassung je eine Nut mit radial federnd eingelegtem Kunststoffstreifen vorzusehen.

Die Erfindung wird im folgenden anhand der Figuren 1-4 näher erläutert.

Es zeigen:

Fig. 1 eine Filmkamera mit vor dem Dbjektiv angeordnetem Mikrophon;

Fig. 2 einen Teilschnitt durch das Objektiv der Kamera der Fig. 1;

Fig. 3 eine Detaildarstellung eines Ausführungsbeispiels einer Objektiv-Fassung nach der Erfindung;

Fig. 4 eine Detaildarstellung eines anderen Ausführungsbeispiels.

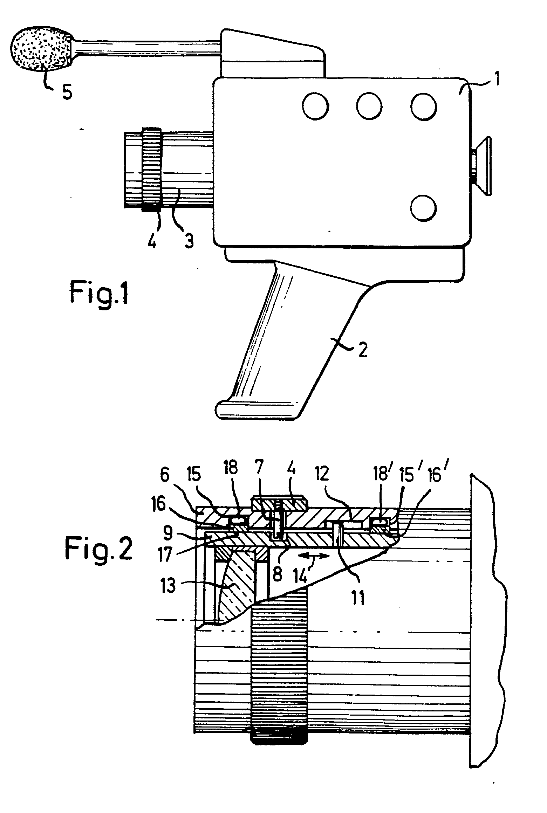

Die in Fig. 1 dargestellte Filmaufnahmekamera besteht aus dem eigentlichen Kameragehäuse 1, an welches ein Handgriff 2 angelenkt ist sowie aus dem Kameraobjektiv 3. Dieses Objektiv weist einen zur Fokussierung dienenden drehbaren Ring 4 auf. Mit dem Kameragehäuse 1 mechanisch und elektrisch lösbar verbunden ist im dargestellten Beispiel ein Mikrophon 5. Das Mikrophon kann auch vom Kameragehäuse 1 völlig getrennt an einem eigenen Träger vor der Kamera angeordnet sein.

Um zu vermeiden daß Laufgeräusche aus dem Inneren des Kameragehäuses 1 durch das Objektiv 3 auf das Mikrophon 5 treffen, weist das Objektiv 3 eine Fassung auf, welche nach der Erfindung ausgebildet ist.

Eine solche Fassung ist beispielsweise in Fig. 2 in Teilschnitt dargestellt. Diese Objektiv-Fassung weist ein erstes fest oder lösbar mit der Kamera verbundenes Fassungsteil 6 auf, das vom Fokussierungs-Ring 4 umgeben ist. Dieser Ring greift mit einem Stift 7 in eine spiralige Nut 8 des zweiten Fassungsteiles 9 ein. Dieses Teil 9 ist mittels eines Stiftes 11 im axial verlaufenden Schlitz 12 im Fassungsteil 6 geradegeführt. Beim Drehen des Fokussierungs-Ringes 4 wird also das zweite Fassungsteil 9 und damit die mit diesem verbundene Frontlinse 13 des Objektivs in Richtung des Pfeiles 14 bewegt.

In das erste kamerafeste Fassungsteil 6 ist eine ringförmige Nut 15 eingeschnitten. In diese Nut ist ein geschlitzter Kunststoffstreifen 16 eingelegt, der bei Bewegung des zweiten Fassungsteiles 9 auf dessen zylindrischer Fläche 17 dichtend gleitet. Der Kunststoffstreifen 16 liegt über seinen gesamten Umfang radial federnd an der zylindrischen Fläche 17 des zweiten Fassungsteils 9 an. Im dargestellten Ausführungsbeispiel wird die radial gerichtete Federkraft auf den Streifen 16 von einem Silikonschlauch 18 ausgeübt, der in die Nut 15 eingelegt ist.

Der Kunststoffstreifen 16 ist aus einem Material mit guten Trocken-Gleiteigenschaften ausgebildet. Als ein solches Material kann Kunststoff verwendet werden. welches unter dem Handelsnamen "Teflon" oder unter dem Handelsnamen "Rulon" im Handel erhältlich ist. Diese Materialien weisen so gute Gleiteigenschaft auf, daß das Drehmoment welches am Ring 4 zur Fokussierung des Objektivs 3 aufzubringen ist gegenüber einem nicht abgedichteten Objektiv nicht meßbar erhöht wird.

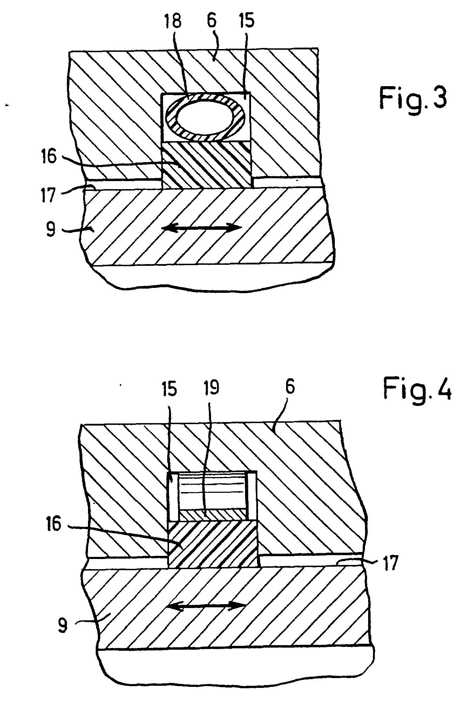

Anstelle des Silikonschlauches 18 der Fig. 2 und 3 kann als radial federndes Element auch eine Blattfeder 19 verwendet werden, wie sie im Ausführungsbeispiel der Figur 4 dargestellt ist. Auch andere radial federnde Elemente sind möglich. Es muß jedoch in jedem Falle gewährleistet sein, daß der Abdichtstreifen 16 über seinen gesamten Umfang gleichmäßig federnd an der zylindrischen Fläche 17 des Fassungsteils 9 anliegt.

Wenn es darum geht ein Objektiv so auszubilden, daß auch für höchst empfindliche Mikrophone kein Geräusch nach außen gelangen kann, so ist es vorteilhaft mehrere federnde Elemente vorzusehen, wie dies im Ausführungsbeispiel der Fig. 2 angedeutet ist. Hier ist eine zweite Nut 15' vorgesehen in die ein Abdichtstreifen 16' eingelegt ist, welcher unter der Federwirkung eines Silikonschlauches 18' über seinen gesamten Umfang federnd an der Zylinderfläche 17 des Fassungsteiles 9 anliegt.

**Patentansprüche**

1. Objektiv-Fassung zum Anschluß an eine Kamera (1), mit einem ersten, an die Kamera anschließbaren Fassungsteil (6) und eineim zür Haltertung optischer Glieder (13) dienenden und axial verschiebbar im ersten gelagerten zweiten Fassungsteil (9), wobei eines dieser Fassungsteile mit einer ringförmigen Nut (15) versehen ist, in die eine über den gesamten Umfang radial federnde, an einer zylindrischen Fläche (17) des anderen Fassungsteils anliegende Anordnung eingelegt ist, dadurch gekennzeichnet, daß die Nut (15) rechteckförmigen Querschnitt aufweist, daß in diese Nut zunächst ein radial federndes Element (18, 19) und darüber ein geschlitzter Kunststoffstreifen mit rechteckförmigem Querschnitt eingelegt ist, daß der Kunststoffstreifen (16) aus einem Material mit guten Trocken-Gleiteigenschaften besteht und den Luftspalt zwischen den beiden Fassungsteilen (6) und (9) über deren gesamten Umfang abdichtet, um eine Geräuschausbreitung über diesen Luftspalt zu verhindern.

2. Objektiv-Fassung nach Anspruch 1, dadurch gekennzeichnet, daß als radial federndes Element ein Silikonschlauch (18) verwendet ist.

3. Objektiv-Fassung nach Anspruch 1, dadurch gekennzeichnet, daß als radial federndes Element eine Blattfeder (19) verwendet ist.

4. Objektiv-Fassung nach Anspruch 1 — 3, dadurch gekennzeichnet, daß an mehreren Stellen je eine Nut (15, 15') mit radial federnd eingelegtem Kunststoffstreifen (16, 16') vorgesehen ist.

**Revendications**

1. Monture d'objectif destinée à être raccordée à un appareil de prise de vues (1) et comportant une première partie (6) pouvant être raccordée à l'appareil de prise de vues et une seconde partie (9) servant à maintenir des éléments optiques (13) et montée de manière à pouvoir être déplacée axialement dans la première partie de la monture, l'une de ces parties de la monture comportant une gorge annulaire (15) dans laquelle est inséré un dispositif produisant une élasticité axiale sur l'ensemble de la circonférence et s'appliquant sur une surface cylindrique (17) de l'autre partie de la monture, caractérisée en ce que la gorge (15) possède une section transversale rectangulaire, qu'un élément (18, 19) produisant une élasticité radiale est tout d'abord inséré dans cette gorge, et qu'une bande fendue de matière plastique possédant une section transversale rectangulaire est insérée par-dessus cet élément dans la gorge, que la bande de matière plastique (16) est réalisée en un matériau possédant de bonnes propriétés de glissement à sec et ferme de façon étanche la fente présente entre les deux parties (6) et (9) de la monture, sur l'ensemble de la périphérie de ces parties afin d'empêcher la propagation de bruits à travers cette fente.

2. Monture d'objectif selon la revendication 1, caractérisée en ce qu'on utilise, comme élément produisant une élasticité radiale, un tuyau en silicone (18).

3. Monture d'objectif selon la revendication 1, caractérisée en ce qu'on utilise, comme élément produisant une élasticité radiale, un ressort à lame (19).

4. Monture d'objectif selon les revendications 1—3, caractérisée en ce qu'en plusieurs emplacements il est prévu des gorges respectives (15, 15') dans lesquelles sont insérées, de manière à exercer une élasticité radiale, des bandes de matière plastique (16, 16').

**Claims**

1. Lens mount for connection to a camera (1), with a first mount component (6) which can be connected to the camera and a second mount component (9) supported in the first component, with component (9) serving as a holding device for optical elements (13) and being axially displaceable in component (6), with one of the mount components having an annular groove (15) in which an element is inserted which rests radially and elastically against the entire circumference of the cylindrical surface (17) of the other mount component; characterized by the fact that the groove (15) has a rectangular cross-section, that a radially elastic element (18, 19) is inserted in this groove and that a slotted plastic strip with a rectangular cross-section is placed on top of it, that the plastic strip (16) is made of material with good dry sliding properties and seals the air slit between the two mount components (6) and (9) along their entire circumferences to prevent the propagation of noise through this air slit.

2. Lens mount according to claim 1, characterized by the fact that a silicone tube (18) is used as the radially elastic element.

3. Lens mount according to claim 1, characterized by the fact that a leaf spring (19) is used as the radially elastic element.

4. Lens mount according to claims 1—3, characterized by the fact that a groove (15, 15') with an inserted radially elastic plastic strip (16, 16') is provided in several places.

Fig.1

5

1

4 3

2

Fig.2

6 15 18 7 4 12 18' 15' 16'

16

9

17

13

8 14 11

18   6   15

Fig. 3

16

17

9

15   19   6

Fig. 4

16

17

9